# EUROPÄISCHE PATENTSCHRIFT

(11) **EP 3 160 617 B1**
(45) Veröffentlichungstag und Bekanntmachung des Hinweises auf die Patenterteilung: **27.11.2019**
(21) Anmeldenummer: 15757222.3
(22) Anmeldetag: 27.08.2015
(51) Int. Cl.: B01D 53/00, B60T 17/00, B60Q 1/00

(54) **VERFAHREN UND TROCKNUNGSEINRICHTUNG ZUR REDUZIERUNG DER LUFTFEUCHTE IN EINEM GEHÄUSE**
METHOD AND DEVICE FOR REDUCING HUMIDITY IN A HOUSING
PROCÉDÉ ET APPAREIL DE RÉDUCTION DE L'HUMIDITÉ DANS UN BOÎTIER

(30) Priorität: 03.09.2014 EP 14183340
(43) Veröffentlichungstag der Anmeldung: 03.05.2017
(73) Patentinhaber: Siemens Mobility GmbH, 81739 München (DE)
(72) Erfinder: FUCHS, Andreas, 91056 Erlangen (DE)
(86) Internationale Anmeldenummer: PCT/EP2015/069657
(87) Internationale Veröffentlichungsnummer: WO 2016/034493

(56) Entgegenhaltungen:
- EP-A2- 0 859 188
- DE-A1- 4 205 735
- DE-A1- 10 135 849
- DE-A1- 10 253 357
- DE-A1- 19 838 950
- DE-A1-102006 023 785
- DE-A1-102012 015 041
- DE-B3- 10 333 917
- US-A1- 2009 001 001

## Beschreibung

Die Erfindung betrifft ein Verfahren zur Reduzierung der Luftfeuchte in einem Gehäuse. Die Erfindung betrifft weiter eine Trocknungseinrichtung sowie ein Fahrzeug, insbesondere ein Schienenfahrzeug, mit einer solchen Trocknungseinrichtung.

Elektrische, elektronische oder mechanische Bauelemente und Komponenten sind empfindlich gegenüber Feuchtigkeit in der Umgebungsluft. Diese Bauelemente kommen in einer Vielzahl von Geräten zur Anwendung. So sind beispielsweise Leiterplatten elektronischer Geräte aus elektrischen oder elektronischen Bauelementen aufgebaut. Anhaltende Feuchte gefährdet diese Bauelemente so dass diese häufiger ausfallen als trocken betriebene Bauelemente. Dieses betrifft alle oder zumindest nahezu alle elektronischen Komponenten und Geräte, die aus elektrischen, elektronischen oder mechanischen Bauelementen aufgebaut sind.

Ein besonderes Problem ergibt sich bei Anwendungen, die in nicht-klimatisierten oder nicht-temperierten Umgebungen betrieben werden. Die in dieser Umgebung eventuell vorhandene Luftfeuchtigkeit kann zu einer Kondensation und damit zu Feuchtigkeit an den Bauelementen führen. Ebenso führt eine Schwankung von Temperaturen zu einer Kondensation der Feuchtigkeit aus der Luft an den Bauelementen. Diese Kondensation reduziert die Lebensdauer der Bauelemente, so dass diese häufiger ausfallen als trocken betriebene Bauelemente. Darüber hinaus kann Korrosion durch die Feuchte einen sicheren und zuverlässigen Betrieb dieser Komponenten und der daraus aufgebauten Anlagen verhindern.

Insbesondere in tropischen Ländern hat es sich dabei bewährt, solche oben beschriebene Anordnungen in relativ luftdichte Schränke einzubauen und/oder in diese Schränke Trocknungsmittel einzubringen. Das Trocknungsmittel muss dann zyklisch getauscht werden. Je nach Umgebungsfeuchte können hieraus sehr kurze Austauschzeiten von wenigen Tagen resultieren. Dies beeinträchtigt durch die anfallenden kurzen Wartungsintervalle die Verfügbarkeit solcher Anlagen. Gleichzeitig steigen damit die Wartungskosten für den Betrieb dieser Anlagen.

Der Erfindung liegt die Aufgabe zugrunde, ein Verfahren zur Reduzierung der Luftfeuchte in Geräten anzugeben, das auf besonders einfache Weise realisiert werden kann und darüber hinaus einen geringen Wartungsaufwand aufweist.

Diese Aufgabe wird durch ein Verfahren zur Reduzierung der Luftfeuchte in einem Gehäuse dadurch gelöst, dass in dem Gehäuse Druckluft entspannt wird.

Diese Aufgabe wird weiter durch eine Trocknungseinrichtung nach Anspruch 9 sowie durch ein Fahrzeug, insbesondere durch ein Schienenfahrzeug, nach Anspruch 13 gelöst.

Der Erfindung liegt die Erkenntnis zugrunde, dass sich die Luftfeuchte in einem Gehäuse dadurch reduzieren lässt, dass Druckluft in dem Gehäuse entspannt wird. Unter Entspannen versteht der Fachmann die Reduzierung des Drucks eines Gases bei gleichzeitiger Erhöhung seines Volumens. Durch das Entspannen von Druckluft wird die Feuchte der im Gehäuse vorhandenen Luft reduziert. Luft mit einem höheren Anteil an Luftfeuchtigkeit wird durch die hinzukommende entspannte Druckluft verdrängt, so dass die Luftfeuchte im Gehäuse sinkt. Diese dann trockene Luft kann Feuchtigkeit von Bauelementen aufnehmen, um dadurch das Bauelement zu trocknen. Darüber hinaus oder alternativ verhindert die trockene Luft im Gehäuse die Kondensation von Feuchtigkeit am Bauelement. Insbesondere durch Temperaturschwankungen in der Umgebung hervorgerufene Kondensation kann durch das Verfahren zur Reduzierung der Luftfeuchte verhindert werden. Der Begriff der Bauelemente umfasst neben elektrischen, elektronischen und mechanischen Komponenten auch Isoliermaterialien beispielsweise für Schall- und Temperaturdämmung sowie Dichtungsmassen, die aufgrund ihrer Beschaffenheit Feuchtigkeit aus der Luft aufnehmen können. Das Gehäuse kann dabei dicht ausgeführt sein, um ein Eindringen von feuchter Luft möglichst gering zu halten. Dabei hat es sich als vorteilhaft erwiesen, wenn das Gehäuse eine Schnittstelle nach außen aufweist, mit der der Luftdruck im Gehäuse geregelt oder gesteuert werden kann. Damit ist es beispielsweise möglich, einen im Vergleich zur Umgebung des Gehäuses höheren Druck im Innern des Gehäuses zu erzeugen, was ein Eindringen feuchter Luft aus der Umgebung auf einfache Weise verhindert. Des Weiteren erlaubt die Schnittstelle zur Druckluftregulierung das Einbringen hoher Luftmengen ohne eine direkte Auswirkung auf den Luftdruck im Innern des Gehäuses zu haben. Damit sind Luftmenge der entspannten Druckluft und der Druck im Gehäuse voneinander entkoppelt. Weiter eignet sich dieses Verfahren im Besonderen für Gehäuse, die nicht hermetisch dicht sind. Eintretende Luft, dessen Feuchtigkeit zu einer Kondensation an den Bauelementen führen kann oder führt, kann mit diesem Verfahren beseitigt oder verdrängt werden. Das Verfahren bewirkt, dass die Luft weniger Feuchtigkeit enthält und auch bei fallender Temperatur keine Kondensation an den Bauelementen eintritt. Das Entspannen der Druckluft kann dabei kontinuierlich, zu bestimmten Zeitpunkten, beispielsweise zyklisch, oder ereignisgesteuert erfolgen. Der Vorgang des Entspannens kann dabei über die Vorrichtung zum Entspannen von Druckluft, wie beispielsweise Ventile oder Düsen gesteuert erfolgen. Für die Steuerung der Luftmenge und/oder der Zeitpunkte kann eine Steuerung oder eine Regelung vorgesehen werden, welche die Zufuhr trockener Luft in Abhängigkeit von Umgebungsparametern, wie beispielsweise Feuchtegehalt der Umgebungsluft oder der Luft im Innern des Gehäuse, Temperatur etc. regelt und/oder steuert. Bei dem erfindungsgemäßen Verfahren kann die Druckluft innerhalb des Gehäuses erzeugt werden oder auch durch eine externe Erzeugung beispielsweise mittels eines geeigneten Rohrsystems dem Gehäuse zugeführt werden.

Bei einer weiteren vorteilhaften Ausgestaltungsform wird Druckluft von außen dem Gehäuse zugeführt. Bei dieser Ausgestaltungsform sind die Komponenten zur Drucklufterzeugung außerhalb des Gehäuses angeordnet. Über ein geeignetes Rohrsystem oder Schläuche wird die Druckluft dem Innern des Gehäuses zugeführt. Damit ist es möglich, das Gehäuse, welches das für den Betrieb in trockener Umgebung vorgesehene Bauelement umfasst, möglichst klein und platzsparend aufzubauen. Damit benötigt das erfindungsgemäße Verfahren keinen oder kaum zusätzlichen Bauraum. Darüber hinaus ist es möglich, bereits in der Nähe vorhandene Druckluft zu nutzen, indem man diese beispielsweise über ein Rohr- und/oder Schlauchsystem in das Gehäuse einführt. Die Erzeugung der Druckluft kann beispielsweise mit Hilfe eines Kompressors geschehen. Als besonders günstig hat es sich erwiesen, Druckluft zu nutzen, die bereits für andere Aufgaben erzeugt wird. Damit ist eine spezielle oder zusätzliche Erzeugung für den Anwendungsfall der Reduzierung der Luftfeuchte nicht erforderlich.

Bei einer weiteren vorteilhaften Ausgestaltungsform wird die Druckluft vor dem Entspannen getrocknet. Unter Trocknung versteht man die Reduktion der in der Druckluft vorhandenen Feuchtigkeit. Bei vielen Anwendungen, die Druckluft erfordern, wird bereits eine Trocknung direkt nach der Kompression durchgeführt. Dies hat den Vorteil, dass das Rohrsystem zur Verteilung der Druckluft derart trocken ist, um zuverlässig Korrosion, hervorgerufen durch Feuchtigkeit, in diesem Rohrsystem vollständig oder zumindest weitestgehend zu vermeiden. Darüber hinaus sind Kompressoren oftmals bereits mit einer entsprechenden Trocknungsvorrichtung ausgerüstet. Durch den Einsatz dieser Standardbauteile kann ein entsprechendes System einfach und kostengünstig aufgebaut werden. Die Wirkung des Verfahrens zur Reduzierung der Luftfeuchte ist durch den Einsatz von bereits getrockneter Druckluft deutlich effektiver. Somit kann eine Reduzierung der Luftfeuchte bereits mit geringen Mengen an Druckluft effizient durchgeführt werden.

Bei einer weiteren vorteilhaften Ausgestaltungsform ist das Gehäuse Bestandteil eines Fahrzeugs, wobei die Druckluft, die für einen Betrieb des Fahrzeugs erzeugt wird, auch zum Entspannen in dem Gehäuse verwendet wird. In Fahrzeugen hat es sich als vorteilhaft erwiesen, Druckluft zur Reduzierung von Luftfeuchte zu verwenden, die an anderer Stelle für den Betrieb eines Fahrzeugs erforderlich ist. Bei Lastwagen wird beispielsweise oftmals die Bremse mit Hilfe von Druckluft betrieben. Diese Druckluft kann durch ein geeignetes Rohrsystem oder Schlauchsystem an mindestens ein zu trocknendes Bauelement herangeführt werden und mittels einer Vorrichtung zum Entspannen von Druckluft zur Reduzierung der Luftfeuchte verwendet werden. Genauso eignet sich diese Anordnung neben der Trocknung von Bauelementen auch zur Verhinderung von Kondensation an dem Bauelement. Fahrzeuge sind meistens großen Temperaturunterschieden ausgesetzt. Daher ist es hier besonders wichtig, eine Kondensation von Luftfeuchtigkeit zu vermeiden. Durch die Nutzung von bereits vorhandenen Komponenten eines Fahrzeugs erhöhen sich die Kosten für die Durchführung des Verfahrens zur Reduzierung der Luftfeuchte nur unwesentlich. Damit ist es möglich, auf kostengünstig Art und Weise ein Bauelement zu trocknen und/oder die Kondensation an diesem Bauelement zu verhindern.

Bei einer weiteren vorteilhaften Ausgestaltungsform ist das Fahrzeug ein Schienenfahrzeug, wobei die Druckluft, die für den Betrieb des Schienenfahrzeugs erzeugt wird, für ein Bremssystem des Schienenfahrzeugs verwendet wird. Der Vorteil dieses Verfahrens liegt darin, dass die Druckluft im gesamten Schienenfahrzeug zur Verfügung steht. Damit kann an beliebiger Stelle des Schienenfahrzeugs die Trocknung von einem oder mehreren Bauelementen stattfinden. Ebenso kann die Kondensation von Feuchtigkeit an einem oder mehreren Bauelementen verhindert werden. Die Druckluft in Schienenfahrzeugen wird meistens durch einen Drucklufttrockner getrocknet, so dass eine Restfeuchte von unter 35% in der Druckluft entsteht. Hierzu gibt es Vorgaben zur Luftqualität aus der internationalen ISO Norm 8573, die eine Restfeuchte der Druckluft von weniger als 35% fordert. Diese geringe Feuchte, auch als Restfeuchte bezeichnet, sinkt weiter erheblich ab, wenn zur Trocknung der Bauelemente die Druckluft entspannt wird. Durch das Vorhandensein von Druckluft für das Bremssystem eines Schienenfahrzeugs und der dort herrschenden hohen Anforderungen an die Luftqualität mit einer Restfeuchte von unter 35%, eignet sich das Verfahren zur Reduzierung der Luftfeuchte im Besonderen für Schienenfahrzeuge um dort Bauelemente zu trocknen oder Kondensation an diesen zu verhindern. Hinzu kommt, dass aufgrund des Betriebs eines Schienenfahrzeugs bei unterschiedlichen Außentemperaturen die Gefahr von entstehender Feuchtigkeit, beispielsweise durch Kondenswasserbildung besonders hoch ist. Für diese Anwendung ist das erfindungsgemäße Verfahren besonders wirtschaftlich einsetzbar, da eine Kondensation der Luftfeuchtigkeit mit dem Verfahren wirkungsvoll unterbunden wird. Wartungsarbeiten, die bei der Verwendung von Trocknungsmitteln erforderlich sind, können entfallen oder zumindest in deutlichen längeren Abständen durchgeführt werden. Dies senkt Wartungskosten deutlich. Durch die erhöhte Verfügbarkeit des Schienenfahrzeugs kann die Planung des Einsatzes des Schienenfahrzeugs deutlich einfacher gestaltet werden. Dies senkt daher auch die Kosten für die Logistik im Betrieb der Schienenfahrzeuge. Es hat sich als vorteilhaft erwiesen, beim erfindungsgemäßen Verfahren zur Versorgung mit Druckluft die Hauptluftbehälterleitung des Schienenfahrzeuges zu nutzen. Diese wird vom Hauptluftbehälter des Schienenfahrzeugs gespeist. Der Luftpresser, der Kompressor eines Schienenfahrzeuges, hält den Druck im Hauptluftbehälter zwischen 8,5 und 10 bar. Somit bietet sich im Schienenfahrzeug im Besonderen ein Luftdruck zwischen 8,5 bar und 10 bar zur Durchführung des Verfahrens an. Auch die Nutzung der Hauptluftleitung zur Bereitstellung von Druckluft für das erfindungsgemäße Verfahren hat sich als sinnvoll erwiesen. Damit steht dem erfindungsgemäßen Verfahren ein Druck der Druckluft im Bereich von 4 bar bis 6 bar zur Verfügung.

Bei einer weiteren vorteilhaften Ausgestaltungsform wird die Druckluft dazu verwendet, im Gehäuse einen höheren Luftdruck als in der Umgebung außerhalb des Gehäuses zu erzeugen. Neben dem Problem der Feuchte bei Bauelementen ist aufgrund der heranströmenden Luft aus der Umgebung auch ein Problem der Verschmutzung gegeben. Die Verschmutzung entsteht durch eindringende Schmutzpartikel, die mit der Luft aus der Umgebung in das Gehäuse eindringt. Das Eindringen der Schmutzpartikel kann auf einfache Weise dadurch verhindert werden, dass der Druck im Innern des Gehäuses größer ist als in der Umgebung des Gehäuses. Dadurch wird das Eindringen von Schmutzpartikel wirkungsvoll unterdrückt.

Bei einer weiteren vorteilhaften Ausgestaltungsform wird das Verfahren zur Trocknung von mindestens einem Bauelemente oder zur Verhinderung von Kondensation an mindestens einem Bauelement verwendet. Bei dem Bauelement kann es sich um ein elektrisches, elektronisches oder mechanisches Bauelement handeln. Ebenso sind Bauelemente eingeschlossen, die eine Kombination von elektrischen, elektronischen und mechanischen Bauteilen aufweisen. Als Beispiel hierfür seien Leiterplatten, elektronische Schaltungen, Mess- und Regeleinrichtungen und Rechner genannt. Gerade diese Bauelemente stellen eine besonders hohe Anforderung an eine geringe Feuchte dar. Feuchte und damit gegebenenfalls einhergehende Korrosion können die Lebensdauer dieser Bauelemente teils deutlich reduzieren. Mit Hilfe des Verfahrens zur Reduzierung der Luftfeuchte kann eine Kondensation an diesen Bauelementen verhindert werden. Falls Feuchtigkeit bereits an dem Bauelement anliegt können diese Bauelemente getrocknet werden. Dieses Verfahren stellt einen zuverlässigen Betrieb sicher und führt zu einer zum Teil deutlich höheren Lebensdauer. Wartungsaufwand für die Beseitigung von Feuchtigkeit oder durch den frühzeitigen Ausfall von Bauelementen kann hierdurch deutlich verringert werden.

Bei einer weiteren vorteilhaften Ausgestaltungsform ist das Bauelement ein Leistungshalbleiter. Feuchtigkeit in der Nähe von Leistungshalbleitern kann ebenfalls zu einer hohen Ausfallrate dieser Bauelemente führen. Ein Ausfall dieser Bauelemente kann aufgrund der hohen Energie, mit denen Leistungshalbleiter betrieben werden, im Fehlerfall zu weiteren Ausfällen und/oder Beschädigungen im System führen. Teilweise kann auch eine Gefährdung von Personen in unmittelbarer Umgebung der Leistungshalbleiter nicht ausgeschlossen werden. Daher ist es für Leistungshalbleiter im besonderen Maße erforderlich, Ausfälle zu verhindern. Durch das erfindungsgemäße Verfahren werden Ausfälle aufgrund von Feuchte vermieden oder zumindest deutlich reduziert. Dies senkt zum einen die Kosten für die korrektive Wartung und Instandhaltung und auf der anderen Seite werden darüber hinaus Ersatzteilkosten für ausgefallene, teilweise recht teure Leistungshalbleiter eingespart, da sich die Lebensdauer der Leistungshalbleiter im Betrieb mit trockener Luft erhöht. Da sich der Ausfall von Leistungshalbleitern auch negativ auf die andere Bauelemente in der Umgebung auswirken kann, werden durch das erfindungsgemäße Verfahren deutlich Reparaturkosten eingespart.

Bei einer weiteren vorteilhaften Ausgestaltungsform wird durch Anpassung der Luftfeuchte im Innern des Gehäuses ein vorgebbares Wartungsintervall erfüllt. Der Ausfall von Bauelementen kann dadurch verhindert oder zumindest verzögert werden, dass diese frei oder zumindest nahezu frei von Feuchtigkeit sind. Der Grad der Feuchte an diesen Bauelementen wird unter anderem durch die Feuchte der Umgebungsluft bestimmt. Je trockener die Luft in der Umgebung der Bauelemente ist, desto weniger Feuchtigkeit findet sich an den Bauelementen. Um eine besonders lange Lebensdauer zu realisieren, wird die Luft im Gehäuse entsprechend stark getrocknet. Dies geschieht mit dem erfindungsgemäßen Verfahren mittels des Entspannens von Druckluft. Bei vorgegebenen Wartungsintervallen, wie es beispielsweise bei Fahrzeugen oder insbesondere Schienenfahrzeugen die Regel ist, kann ein Optimum realisiert werden, das zum einen zu einer möglichst langen Lebensdauer und zum anderen zu geringen Kosten bei der Durchführung des erfindungsgemäßen Verfahrens führt. Ein Wartungsintervall der Anlage oder des Fahrzeugs wird dann nicht mehr allein aufgrund von hoher Luftfeuchtigkeit in der Umgebung bestimmt .Je trockener die Luft in dem Gehäuse ist, desto mehr Kosten entstehen durch entsprechende Kompressoren oder anderen Komponenten des Druckluftsystems, wie beispielsweise Vorrichtungen zur Trocknung der Druckluft. Ziel einer kostengünstigen Lösung ist es damit, das System zur Trocknung der Bauelemente so auszulegen, dass zum einen die Umgebungsluft hinreichend getrocknet wird und zum anderen kostengünstig herstellbar ist.

Bei einer weiteren vorteilhaften Ausgestaltungsform ist das Gehäuse ein Stromrichter oder ein Teil eines Stromrichters. Stromrichter sind für den Betrieb einer Anlage oder eines Fahrzeugs meistens von besonderer Bedeutung, da diese für den Betrieb oftmals zwingend erforderlich sind. Aufgrund der hohen Kosten eines Stromrichters werden diese selten redundant ausgelegt. Ein Ausfall des Stromrichters verursacht dadurch oftmals den Ausfall der Anlage oder des gesamten Fahrzeugs. Zumindest ist die Leistungsfähigkeit stark eingeschränkt. Bei einem Schienenfahrzeug werden Stromrichter für die Traktion und die Versorgung der Hilfsbetriebe eingesetzt. Unter Hilfsbetriebe versteht man die Einrichtungen des Fahrzeugs, die mit elektrischer Energie versorgt werden müssen, wie beispielsweise Klimaanlagen, Beleuchtung, Zugsicherung, Kompressoren etc. Ein Ausfall dieser Komponenten wirkt sich damit direkt auf den Betrieb der Anlage oder des Fahrzeugs aus. Ein Ausfall eines Stromrichters in der Traktion oder der Hilfsbetriebeversorgung verursacht häufig den kompletten Ausfall des Schienenfahrzeugs. Zumindest ist ein Betrieb nur noch sehr eingeschränkt möglich. Daher wird bei der Konstruktion und der Auslegung von Schienenfahrzeugen im Zuge der Sicherstellung einer hohen Verfügbarkeit ein besonderes Augenmerk auf die Ausfallsicherheit dieser Stromrichter gelegt. Durch den Betrieb des Stromrichters oder Teilen des Stromrichters mit feuchtigkeitsarmer Luft kann ein deutlicher Beitrag zu einer hohen Ausfallsicherheit geleistet werden.

Im Folgenden wird die Erfindung anhand der in den Figuren dargestellten Ausführungsbeispiele näher beschrieben und erläutert. Es zeigen:
- FIG 1: ein Schienenfahrzeug mit einer Trocknungseinrichtung,
- FIG 2: Trocknungseinrichtung.

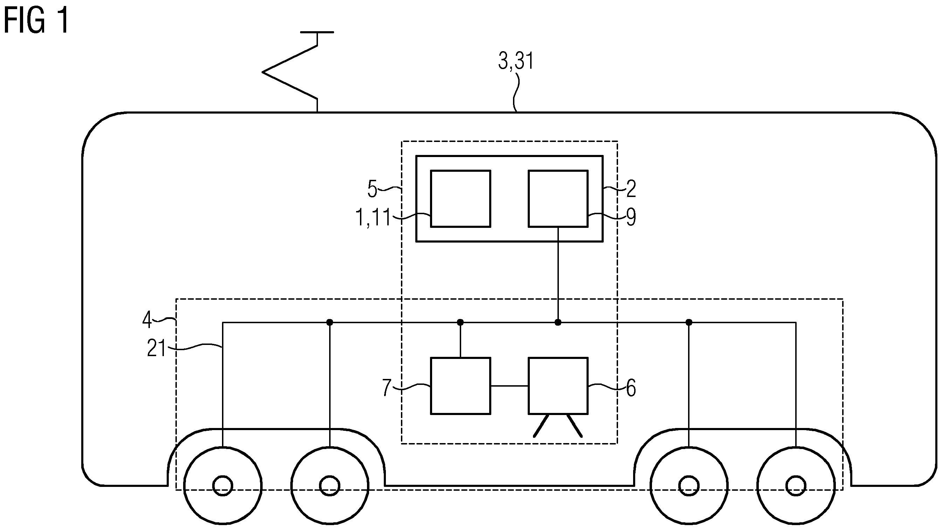

FIG 1 zeigt ein Fahrzeug 3, bei dem es sich um ein Schienenfahrzeug 31 handelt. Dieses weist ein Bremssystem 4 und eine Trocknungseinrichtung 5 zur Reduzierung der Luftfeuchte auf. Die Trocknungseinrichtung 5 umfasst ein Gehäuse 2 mit einem oder mehreren zu trocknenden Bauelementen 1, insbesondere Leistungshalbleitern 11, und eine Vorrichtung 9 zum Entspannen von Druckluft. Darüber hinaus weist die Trocknungseinrichtung 5 in diesem Ausführungsbeispiel eine Vorrichtung 6 zur Erzeugung von Druckluft 10 sowie ein Mittel 7 zur Trocknung von Druckluft 10 auf. Das Bremssystem 4 umfasst eine Vorrichtung 6 zur Erzeugung von Druckluft 10. Die Druckluft 10 befindet sich im Inneren des Rohrsystems 21. Darüber hinaus umfasst das Bremssystem 4 Mittel 7 zur Trocknung von Druckluft 10. Die Vorrichtung 6 zur Erzeugung von Druckluft 10 und das Mittel 7 zur Trocknung von Druckluft 10 werden in diesem Ausführungsbeispiel des Schienenfahrzeugs gemeinsam von der Trocknungseinrichtung 5 und dem Bremssystem 4 genutzt, so dass diese Komponenten nicht doppelt vorhanden sein müssen. Zum Zwecke der Bremsung wird Druckluft an die einzelnen Radsätze verteilt. Dabei wird an dieser Stelle nicht zwischen unterschiedlichen Komponenten der Bremse wie beispielsweise Hauptluftleitung und Hauptluftbehälterleitung unterschieden. Durch die Vorrichtung 6 zur Erzeugung von Druckluft 10 wird Luft aus der Umgebung angesaugt und zu Druckluft 10 komprimiert. Diese wird mit Hilfe eines Mittels 7 zur Trocknung von Druckluft 10 getrocknet. Unter Trocknung versteht man die Reduzierung der in der Druckluft 10 enthaltenen Feuchte. Diese Trocknung dient dazu, die Druckluft 10 im Rohrsystem 21 möglichst feuchtigkeitsarm zu gestalten. Dadurch kann Korrosion am Rohrsystem 21 sowie daran angeschlossenen Komponenten verhindert oder zumindest weitestgehend reduziert werden. Gleichzeitig dient die Trocknung der Druckluft 10 dazu, entsprechende Anforderungen bezüglich Feuchte der Druckluft 10 für die Verwendung in Schienenfahrzeugen 11 einzuhalten. Aus Gründen der Übersichtlichkeit sind in diesem Ausführungsbeispiel nicht alle Komponenten des Bremssystems 4 dargestellt. Es fehlen hier beispielsweise Druckluftspeicher, Ventile und Bremszylinder. Auch wurde auf eine genaue Unterscheidung zur Verteilung der Druckluft im Bremssystem wie beispielsweise zwischen Hauptluftleitung und Hauptluftbehälterleitung verzichtet. Mit dem Rohrsystem 21 wird die Druckluft 10 an die einzelnen Bremsen der einzelnen zu bremsenden Achsen/Rädern herangeführt. Durch geeignete Steuer- und Regeleinrichtungen kann die Bremsung des Schienenfahrzeugs 11 mittels Druckluft 10 erfolgen. Die Anordnung 5 zur Reduzierung der Luftfeuchte nutzt dabei die durch das Bremssystem 4 erzeugte Druckluft 10, da auch die Vorrichtung 9 zum Entspannen von Druckluft 10 sich aus dem Rohrsystem 21 für Druckluft 10 versorgt. Dazu wird über das Rohrsystem 21 Druckluft dem Gehäuse 2 zugeführt. Alternativ oder zusätzlich kann die Vorrichtung 9 zum Entspannen von Druckluft 10 auch direkt Druckluft über eine separate Leitung aus der Vorrichtung 6 zur Erzeugung von Druckluft 10 oder dem Mittel 7 zur Trocknung von Druckluft 10 beziehen. In dem Gehäuse 2 ist eine Vorrichtung 9 zum Entspannen von Druckluft 10 angeordnet. Durch diese Vorrichtung 9 zur Reduzierung der Luftfeuchte wird die bereits getrocknete Druckluft entspannt. Dadurch sinkt die Feuchte der Luft im Gehäuse 2 weiter ab und kann vorhandene Feuchtigkeit am Bauelement 1 einfach aufnehmen und/oder die Kondensation von Feuchtigkeit am Bauelement 1 verhindern. Vorhandene Feuchtigkeit am Bauelement 1, insbesondere an einem oder mehreren Leistungshalbleitern 11, kann dadurch auf besonders einfacher Weise beseitigt oder zumindest weitestgehend reduziert werden. Wie in diesem Ausführungsbeispiel dargestellt, nutzt die Vorrichtung 9 zum Entspannen von Druckluft 10 in dem Gehäuse 2 die bereits vorhandenen Komponenten zur Erzeugung und Trocknung von Druckluft 10 des Bremssystems 4. Dadurch ist die Trocknungseinrichtung 5 zur Durchführung der Reduzierung der Luftfeuchte besonders kostengünstig herstellbar. Dieser Kostenvorteil wirkt sich ebenfalls positiv auf die Herstellkosten des Schienenfahrzeugs 31 aus.

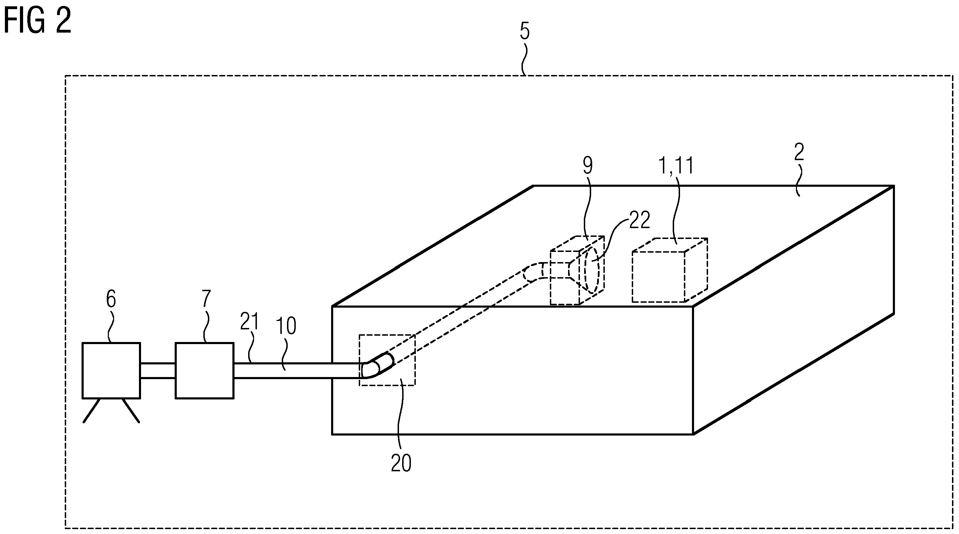

FIG 2 zeigt eine Trocknungseinrichtung 5 zur Reduzierung der Luftfeuchte. Zur Vermeidung von Wiederholungen wird auf die FIG 1 und die dort eingeführten Bezugszeichen verwiesen. Dargestellt sind das Gehäuse 2, die Vorrichtung 6 zur Erzeugung von Druckluft 10 sowie Mittel 7 zur Trocknung von Druckluft 10. In diesem Ausführungsbeispiel sind die Vorrichtung 6 zur Erzeugung von Druckluft 10 sowie das Mittel 7 zur Trocknung von Druckluft 10 außerhalb des Gehäuses 2 angeordnet. Möglich ist auch, mindestens eine dieser Komponenten im Inneren des Gehäuses 2 anzuordnen. Bei der dargestellten Ausführungsform wird die Druckluft 10 nach der Trocknung durch das Mittel 7 zur Trocknung der Druckluft 10 durch eine Schnittstelle 20 zur Zuführung von Druckluft 10 in das Innere des Gehäuses 2 geführt. Im Inneren des Gehäuses 2 wird die Druckluft 10 weiter über eine entsprechende Verrohrung an die Vorrichtung 9 zum Entspannen von Druckluft 10 geleitet. Die Vorrichtung 9 verfügt über geeignete Mittel, um die Druckluft 10 zu entspannen. Das Entspannen kann dabei kontinuierlich, gesteuert oder geregelt durchgeführt werden. Dafür sind in der Vorrichtung 9 eine oder mehrere Komponenten wie beispielsweise eine Düse oder ein Ventil 22 vorhanden. Mit diesem kann beispielsweise in Abhängigkeit der vorhandenen Luftfeuchte im Innern des Gehäuses 2 das Entspannen der Druckluft 10 gesteuert oder geregelt werden, um eine gewünschte Feuchtigkeit der Luft im Gehäuse 2 zu erreichen. Die gewünschte Luftfeuchtigkeit kann dabei dem System vorgegeben werden.

Obwohl die Erfindung im Detail durch die bevorzugten Ausführungsbeispiele näher illustriert und beschrieben wurde, ist die Erfindung nicht allein auf das offenbarte Beispiel beschränkt und andere Variationen können vom Fachmann hieraus abgeleitet werden, ohne den Schutzumfang der Erfindung zu verlassen.

## Patentansprüche

1. Verfahren zur Reduzierung der Luftfeuchte in einem Gehäuse (2), **dadurch gekennzeichnet, dass** in dem Gehäuse (2) Druckluft (10) entspannt wird, so dass die Feuchte der im Gehäuse (2) vorhandenen Luft durch das Entspannen der Druckluft (10) reduziert wird.

2. Verfahren zur Reduzierung der Luftfeuchte nach Anspruch 1, **dadurch gekennzeichnet, dass** die Druckluft (10) ungetrocknet ist.

3. Verfahren zur Reduzierung der Luftfeuchte nach einem der Ansprüche 1 oder 2, **dadurch gekennzeichnet, dass** die Druckluft (10) von außen dem Gehäuse (2) zugeführt wird.

4. Verfahren zur Reduzierung der Luftfeuchte nach einem der Ansprüche 1 bis 3, **dadurch gekennzeichnet, dass** das Gehäuse (2) Bestandteil eines Fahrzeugs (3) ist, wobei die Druckluft (10), die für einen Betrieb des Fahrzeugs (3) erzeugt wird, auch zum Entspannen in dem Gehäuse (2) verwendet wird.

5. Verfahren zur Reduzierung der Luftfeuchte nach einem der Ansprüche 1 bis 4, **dadurch gekennzeichnet, dass** die Druckluft (10) dazu verwendet wird, im Gehäuse (2) einen höheren Luftdruck als den Luftdruck außerhalb des Gehäuses (2) zu erzeugen.

6. Verfahren zur Reduzierung der Luftfeuchte nach einem der Ansprüche 1 bis 5, **dadurch gekennzeichnet, dass** das zur Verhinderung von Kondensation hervorgerufen durch Temperaturschwankungen in der Umgebung an mindestens einem Bauelement (1) innerhalb des Gehäuses (2) verwendet wird.

7. Verfahren zur Reduzierung der Luftfeuchte nach Anspruch 6, **dadurch gekennzeichnet , dass** das Bauelement (1) ein Leistungshalbleiter (11) ist.

8. Verfahren zur Reduzierung der Luftfeuchte nach einem der Ansprüche 1 bis 7, **dadurch gekennzeichnet, dass** durch Anpassung der Luftfeuchte im Innern des Gehäuses (2) ein vorgebbares Wartungsintervall erreicht wird.

9. Trocknungseinrichtung (5) mit einem Gehäuse (2), einer Vorrichtung (6) zur Erzeugung von Druckluft (10) und einem Bauelement (1), wobei das Bauelement (1) im Gehäuse (2) angeordnet ist, wobei die Vorrichtung (6) zur Erzeugung von Druckluft derart mit dem Gehäuse verbunden ist, dass durch die Vorrichtung (6) erzeugte Druckluft (10) mittels einer Vorrichtung (9) zum Entspannen von Druckluft (10) im Gehäuse derart entspannbar ist, dass die Feuchte der im Gehäuse (2) vorhandenen Luft durch das Entspannen der Druckluft (10) reduziert wird.

10. Trocknungseinrichtung (5) nach Anspruch 9, **dadurch gekennzeichnet, dass** dem Gehäuse (2) Druckluft (10) von außen zuführbar ist.

11. Trocknungseinrichtung (5) nach einem der Ansprüche 9 oder 10, **dadurch gekennzeichnet, dass** die Trocknungseinrichtung (5) Bestandteil eines Fahrzeugs (3) ist und wobei die Trocknungseinrichtung (5) über ein Rohrsystem (21) für Druckluft (10) mit einem Bremssystem (4) des Fahrzeugs (3) verbunden ist.

12. Trocknungseinrichtung (5) nach einem der Ansprüche 9 bis 11, **dadurch gekennzeichnet, dass** das Gehäuse (2) ein Stromrichter oder ein Teil eines Stromrichters ist.

13. Fahrzeug (3), insbesondere Schienenfahrzeug (31), mit einer Trocknungseinrichtung nach einem der Ansprüche 9 bis 11 oder einem Stromrichter nach Anspruch 12.

## Claims

1. Method for reducing the air humidity in a housing (2), **characterised in that** compressed air (10) is expanded in the housing (2) so that the humidity of the air present in the housing (2) is reduced by the expansion of the compressed air (10) .

2. Method for reducing the air humidity according to claim 1, **characterised in that** the compressed air (10) is not dried.

3. Method for reducing the air humidity according to one of claims 1 or 2, **characterised in that** the compressed air (10) is supplied to the housing (2) from outside.

4. Method for reducing the air humidity according to one of claims 1 to 3, **characterised in that** the housing (2) is a component of a vehicle (3), wherein the compressed air (10) which is produced for the operation of the vehicle (3) is also used for the expansion in the housing (2).

5. Method for reducing the air humidity according to one of claims 1 to 4, **characterised in that** the compressed air (10) is used in order to produce a greater air pressure in the housing (2) than the air pressure outside the housing (2).

6. Method for reducing the air humidity according to one of claims 1 to 5, **characterised in that** the method is used for preventing condensation caused by temperature fluctuations in the environment on at least one component (1) inside the housing (2).

7. Method for reducing the air humidity according to claim 6, **characterised in that** the component (1) is a power semiconductor (11).

8. Method for reducing the air humidity according to one of claims 1 to 7, **characterised in that** by adapting the air humidity inside the housing (2) a predeterminable maintenance interval is achieved.

9. Drying device (5) comprising a housing (2), a device (6) for producing compressed air (10) and a component (1), wherein the component (1) is arranged in the housing (2), wherein the device (6) for producing compressed air is connected to the housing, such that compressed air (10) produced by means of the device (6) is able to be expanded in the housing by means of a device (9) for expanding compressed air (10), such that the humidity of the air present in the housing (2) is reduced by the expansion of the compressed air (10).

10. Drying device (5) according to claim 9, **characterised in that** compressed air (10) is able to be supplied to the housing (2) from outside.

11. Drying device (5) according to one of claims 9 or 10, **characterised in that** the drying device (5) is a component of a vehicle (3) and wherein the drying device (5) is connected via a pipe system (21) for compressed air (10) to a braking system (4) of the vehicle (3).

12. Drying device (5) according to one of claims 9 to 11, **characterised in that** the housing (2) is a power converter or a part of a power converter.

13. Vehicle (3), in particular rail vehicle (31), having a drying device according to one of claims 9 to 11 or a power converter according to claim 12.

## Revendications

1. Procédé de réduction de l'humidité de l'air dans un boîtier (2), **caractérisé en ce que** l'on détend de l'air (10) comprimé dans le boîtier (2) de manière à réduire l'humidité de l'air présent dans le boîtier (2) par la détente de l'air (10) comprimé.

2. Procédé de réduction de l'humidité de l'air suivant la revendication 1, **caractérisé en ce que** l'air (10) comprimé n'est pas séché.

3. Procédé de réduction de l'humidité de l'air suivant l'une des revendication 1 ou 2, **caractérisé en ce que** l'on envoie l'air (10) comprimé de l'extérieur au boîtier (2).

4. Procédé de réduction de l'humidité de l'air suivant l'une des revendications 1 à 3, **caractérisé en ce que** le boîtier (2) fait partie d'un véhicule (3), l'air (10) comprimé, qui est produit pour faire fonctionner le véhicule (3), étant utilisé aussi pour la détente dans le boîtier (2).

5. Procédé de réduction de l'humidité de l'air suivant l'une des revendications 1 à 4, **caractérisé en ce que** l'on utilise l'air (10) comprimé pour produire, dans le boîtier (2), une pression de l'air plus haute que la pression de l'air à l'extérieur du boîtier (2).

6. Procédé de réduction de l'humidité de l'air suivant la revendication 1 à 5, **caractérisé en ce qu'**on l'utilise pour empêcher de la condensation provoquée par des fluctuations de température dans ce qui entoure au moins un élément (1) à l'intérieur du boîtier (2).

7. Procédé de réduction de l'humidité de l'air suivant la revendication 6, **caractérisé en ce que** l'élément (1) est un semi-conducteur (11) de puissance.

8. Procédé de réduction de l'humidité de l'air suivant l'une des revendications 1 à 7, **caractérisé en ce qu'**en adaptant l'humidité de l'air à l'intérieur du boîtier (2), on obtient un intervalle d'entretien pouvant être donné à l'avance.

9. Dispositif (5) de séchage, comprenant un boîtier (2), une installation (6) de production d'air (10) comprimé et un élément (1), l'élément (1) étant disposé dans le boîtier (2), l'installation (6) de production d'air comprimé communiquant avec le boîtier (2), de manière à pouvoir, au moyen d'une installation (9) de détente d'air (10) comprimé dans le boîtier (2), détendre de l'air (10) comprimé produit par l'installation (6), de manière à réduire l'humidité de l'air présent dans le boîtier (2) par la détente de l'air (10) comprimé.

10. Dispositif (5) de séchage suivant la revendication 9, **caractérisé en ce que** de l'air (10) comprimé peut être envoyé de l'extérieur au boîtier (2).

11. Dispositif (5) de séchage suivant l'une des revendications 9 ou 10, **caractérisé en ce que** le dispositif (5) de séchage fait partie d'un véhicule (3) et dans lequel le dispositif (5) de séchage communique, par un système (21) de canalisation pour de l'air (10) comprimé, avec un système (4) de frein du véhicule (3).

12. Dispositif (5) de séchage suivant l'une des revendications 9 à 11, **caractérisé en ce que** le boîtier (2) est un convertisseur de courant ou une partie d'un convertisseur de courant.

13. Véhicule (3), notamment véhicule (31) ferroviaire ayant un dispositif de séchage suivant l'une des revendications 9 à 11 ou un convertisseur suivant la revendication 12.
